(19)

**Europäisches Patentamt**
**European Patent Office**
**Office européen des brevets**

(11) **EP 4 746 401 A1**

(12) **EUROPÄISCHE PATENTANMELDUNG**

(43) Veröffentlichungstag:
**20.05.2026 Patentblatt 2026/21**

(21) Anmeldenummer: **25216580.8**

(22) Anmeldetag: **18.11.2025**

(51) Internationale Patentklassifikation (IPC):
**H04N 7/18** *(2006.01)*

(52) Gemeinsame Patentklassifikation (CPC):
**H04N 7/181**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **18.11.2024 AT 509052024**

(71) Anmelder: **Panoblu Ltd.**
**XBX 1092 Ta´Xbiex (MT)**

(72) Erfinder: **LANIK, Hans**
**San Gwann, SGN1751 (MT)**

(74) Vertreter: **Babeluk Patentanwälte GmbH**
**Florianigasse 26/3**
**1080 Wien (AT)**

(54) **VERFAHREN ZUR ÜBERWACHUNG DER UMGEBUNG EINES OBJEKTS**

(57)    Die Erfindung betrifft ein Verfahren zur Überwachung der Umgebung eines Objekts (1), bei dem Bilddaten von einem Kamerasystem (4) generiert werden, das oberhalb des Objekts (1) angeordnet ist, und wobei diese Bilddaten zur Weiterverarbeitung aufbereitet werden, dadurch gekennzeichnet, dass eine selektive Stabilisierung des Kamerasysteme (4) in Bezug auf die Umgebung durchgeführt wird.

Fig. 2

**Beschreibung**

Die vorliegende Erfindung betrifft ein Verfahren zur Überwachung der Umgebung eines Objekts gemäß dem Oberbegriff von Patentanspruch 1.

Das Objekt ist erfindungsgemäß nichtstationär, d.h. nicht starr in Bezug auf die Umgebung. Es kann sich bei dem Objekt beispielsweise um ein Schiff handeln, dessen Umgebung überwacht werden soll. Diese Überwachung kann dazu dienen, Kollisionen zu vermeiden, die durch Hindernisse in Fahrtrichtung des Schiffs vorliegen, es können andere Schiffe in der näheren oder ferneren Umgebung beobachtet werden oder es können unbefugte Personen entdeckt werden, die versuchen, sich dem Schiff unbemerkt zu nähern. Das oben erwähnte Objekt kann im Rahmen der Erfindung auch ein anderes Fahrzeug, wie etwa ein Luftfahrzeug, das in Bodennähe operiert, oder beispielsweise auch ein Gebäude sein, das durch Windkräfte oder dgl. gewissen Schwankungsbewegungen unterliegt.

Es sind Kamerasysteme bekannt, die aus einer Mehrzahl von Kameras bestehen, die rund um ein Schiff oder um ein sonstiges Objekt angeordnet sind und so große Teile der Umgebung oder die Gesamtheit des umliegenden Bereichs abdecken. Die Bilder der einzelnen Kameras werden dann typischerweise auf mehreren Monitoren nebeneinander oder auf einem Monitor in verschiedenen Fenstern angezeigt. In manchen Fällen werden die Aufnahmen der einzelnen Kameras in einem Fenster nacheinander in einer zeitlichen Abfolge dargestellt. Problematisch dabei ist, dass es für eine Überwachungsperson in der Regel sehr schwierig ist, aus diesen einzelnen Bildern einen Gesamtüberblick zu gewinnen und die Bilder gedanklich zu einem Gesamtbild zusammenzufügen. Bei der Anzeige in zeitlicher Abfolge kann es naturgemäß bis zur Länge eines Darstellungszyklus dauern, bis ein neues Objekt für eine Überwachungsperson sichtbar wird. Für sicherheitsrelevante Überwachungen ist dies sehr nachteilig, da auf diese Weise wertvolle Zeit für eine Reaktion auf eine potenzielle Bedrohung verloren gehen kann.

Es ist auch bekannt, die Bilder mehrerer Kameras zu einem Gesamtbild zusammenzufügen, das etwa die Eigenschaften eines mit einem Fisheye-Objektivs an der Mastspitze aufgenommenen Bildes hat. Eine solche Lösung ist in der US 11,887,275 B für ein Schiff offenbart. Da die Mastspitze bei rauer See naturgemäß relativ großen Bewegungen unterworfen ist, schwankt die Darstellung der Umgebung sehr stark. In dem genannten US-Patent wird daher vorgeschlagen, das Bild zu stabilisieren, um eine benutzbare Darstellung auch bei rauer See zu gewährleisten. Der Nachteil dieser Lösung besteht jedoch darin, dass dann die Darstellung des Schiffs selbst und seiner unmittelbaren Umgebung durch die Stabilisierung fälschlicherweise destabilisiert wird, so dass Vorgänge am Schiff in dieser Darstellung praktisch nicht beobachtbar sind. Es gibt aber Aufgabenstellungen, bei denen es gerade darauf ankommt das Schiff und seine unmittelbare Bewegung genau zu beobachten.

Diese Nachteile könnten theoretisch dadurch behoben werden, dass die Überwachungsperson je nach Bedarf zwischen einer stabilisierten Darstellung zur Beobachtung weiter entfernter Objekte und einer nicht stabilisierten Darstellung zur Beobachtung von Vorgängen am Schiff selbst umschaltet. Dies ist jedoch mühsam und nicht komfortabel. Insbesondere können nicht alle Bildteile gleichzeitig sinnvoll beobachtet werden. Überdies stören die jeweils sich heftig im Bild bewegenden Bestandteile die Konzentration der Überwachungsperson.

Eine Aufgabe der vorliegenden Erfindung ist es, diese Nachteile zu vermeiden und eine Lösung anzugeben, bei der Vorgänge in beliebiger Entfernung ungestört gleichzeitig und in Echtzeit beobachtet werden können.

Eine weitere Aufgabe der Erfindung ist es, eine Lösung anzugeben, mit der auch eine Überwachungsperson mit geringer Erfahrung und einem durchschnittlichen räumlichen Vorstellungsvermögen in der Lage ist, intuitiv einen Gesamtüberblick über die Vorgänge in der Umgebung des Objekts zu gewinnen. Die vorliegende Erfindung soll es insbesondere ermöglichen, sowohl einen großräumigen Überblick zu gewinnen als auch bei Bedarf detaillierte Informationen über die Umgebung zu zeigen.

Erfindungsgemäß werden diese obigen Aufgaben durch ein Verfahren mit den Merkmalen von Patentanspruch 1 gelöst.

Eine Grundidee der Erfindung ist es, eine Bildstabilisierung selektiv nur dort durchzuführen, wo es jeweils benötigt wird bzw. lokal in dem jeweils erforderlichen Ausmaß durchzuführen. Im Idealfall eines Schiffes mit einem Kamerasystem, das auf einem vollkommen starren Mast befestigt ist, benötigt man für die Darstellung des Schiffs selbst überhaupt keine Stabilisierung. Wenn es zu nennenswerten Biegeverformungen des Masts kommen kann, kann dies bei Bedarf durch eine Stabilisierung ausgeglichen werden, die in der Praxis allerdings wesentlich geringer ist als die für die Darstellung der Umgebung benötigte. Dies beruht auf der Tatsache, dass die Biegung des Masts in der Regel geringer als 1° ist, die Neigung des Masts insgesamt aufgrund der Krängung jedoch 30° oder mehr betragen kann. Gemäß der Erfindung wird somit der Bereich des Schiffs in der Darstellung nicht oder nur sehr gering stabilisiert, die weitere Umgebung jedoch der Schwankung des Schiffs entsprechend stark.

Es ist ein bevorzugtes Merkmal der Erfindung, dass das Kamerasystem die Umgebung des Objekts mindestens bis zu einem Beobachtungshorizont erfasst und bei der Aufbereitung der Daten ein erster Datenstrom und mindestens ein weiterer Datenstrom erzeugt wird, wobei der erste Datenstrom eine Gesamtdarstellung der erfassten Daten beinhaltet und der weitere Datenstrom einen Abschnitt des Beobachtungshorizonts und eines davorliegenden Bereichs lagerichtig darstellbar beinhaltet. Wesentlich dabei ist, dass der erste Datenstrom eine Gesamtdarstellung aus der Vogelperspektive enthält und der weitere Datenstrom einen Ausschnitt aus der Gesamtdarstellung enthält.

Typischerweise werden der erste Datenstrom und der weitere Datenstrom auf einem Überwachungsmonitor angezeigt. Dabei wird in einem ersten Fenster eine Gesamtdarstellung aus der Vogelperspektive dargestellt, d.h. dass die virtuelle optische Achse im Wesentlichen senkrecht nach unten gerichtet ist, wobei sich das Objekt selbst im Zentrum befindet. Typischerweise ist die Gesamtdarstellung kreisförmig und wird dann, wenn es sich beim Objekt um ein Schiff handelt, zumeist so angezeigt, dass sich die Umgebung vor dem Schiff im Bild oben und die Umgebung hinter dem Schiff im Bild unten befindet. Naturgemäß stehen dann die hinter dem Schiff liegenden Bildobjekte in der Darstellung im ersten Fenster auf dem Kopf. Wichtig ist, dass auf diese Weise auch die Situation auf dem Deck des Schiffs selbst mit dargestellt wird.

In einem weiteren Fenster wird ein Ausschnitt aus der Gesamtdarstellung angezeigt. Dieser Ausschnitt ist jedoch lagerichtig dargestellt, so wie auf einer gewöhnlichen Fotografie. Dies ermöglicht es der Person, die dieses System benutzt, ein in der Gesamtdarstellung erkanntes Bildobjekt genauer und in üblicher Sichtweise zu untersuchen. Durch die gleichzeitige Darstellung werden Verzögerungen durch Umschaltungen und dgl. vermieden und es kann eine Überwachung in Echtzeit realisiert werden.

Das weitere Fenster kann dabei grundsätzlich auf demselben Monitor wie das erste Fenster oder auch auf einem anderen Monitor dargestellt werden. Besonders günstig ist es jedoch, wenn das erste Fenster und das mindestens eine weitere Fenster am selben Überwachungsmonitor angezeigt werden. Dadurch kann auch durch eine intuitive Positionierung der Fenster auf dem Bildschirm die Bedienung des Systems erleichtert werden. Diese Positionierung kann automatisch erfolgen oder auch von der Bedienungsperson selbständig ausgewählt werden.

Eine einfache dynamische Steuerung der Anzeige wird dadurch erreicht, dass eine Bedienungsperson durch Auswählen eines Punkts im ersten Fenster ein die Umgebung dieses Punkts darstellendes weiteres Fenster aufrufen kann, um beispielsweise ein interessantes Bildobjekt näher zu untersuchen. Auf diese Weise wird auch eine intuitiv leicht verständliche Beziehung zwischen den beiden Darstellungen hergestellt.

Vorzugsweise ist vorgesehen, dass im ersten Fenster eine bildliche Darstellung des Bereiches vom unten liegenden Objekt bis zum Beobachtungshorizont, mit dem Objekt im Zentrum, wiedergegeben wird. Dies entspricht in etwa der Darstellung auf einer Landkarte. Das Kamerasystem ist jedoch nicht auf einen nach unten gerichteten halbkugelförmigen Bereich beschränkt, es kann auch ein nach oben gerichteter Bereich abgedeckt werden, der im Extremfall bis zum Zenit reichen kann.

Ist die Überwachung des Luftraums über dem Objekt wichtig, so kann auch eine Darstellung oder weitere Darstellung gewählt werden, wo die virtuelle optische Achse im Wesentlichen senkrecht nach oben gerichtet ist.

Die Verständlichkeit der Darstellung kann insbesondere dadurch verbessert werden, dass der im weiteren Fenster dargestellte Bereich im ersten Fenster markiert wird.

Eine technisch besonders günstige Lösung kann dadurch realisiert werden, dass das Kamerasystem mehrere Kameras mit aneinander angrenzenden oder überlappenden Bildbereichen aufweist und dass die Bilder der einzelnen Kamera zu einem Gesamtbild zusammengefügt werden, das im ersten Fenster angezeigt wird. Durch die Verwendung mehrerer Kameras kann mit einfachen Mitteln eine hohe Auflösung erreicht werden. Insbesondere ist es auf diese Weise möglich, dass durch überlappende Bildbereiche Teile des Mastes und andere Aufbauten des Objekts im Gesamtbild ausgeblendet werden. Durch die Parallaxe aufgrund der unterschiedlichen optischen Achsen der einzelnen Kameras ist es möglich, beispielsweise den Mast, auf dem die Kameras befestigt sind, auszublenden und damit tote Winkel zu vermeiden. So kann eine tatsächlich umfassende Überwachung realisiert werden.

Zusätzlich oder alternativ ist es besonders vorteilhaft, wenn das Kamerasystem Bilder im Infrarotbereich aufnimmt. Auf diese Weise ist nicht nur eine Überwachung auch bei Nacht sinnvoll möglich, es kann auch eine über Bord gegangene Person besser aufgefunden werden.

Die Überwachung kann besonders effizient gestaltet werden, wenn die von den Kameras aufgenommenen Bilder einer Bilderkennung unterzogen werden. Auf diese Weise ist es beispielsweise möglich, gefährliche oder besonders interessante Bildobjekte in der Darstellung besonders hervorzuheben, während als uninteressant und ungefährlich erkannte Bildobjekte nicht besonders markiert werden. Dabei kann eine besonders günstige Lösung so realisiert werden, dass das Kamerasystem auf dem Mast eines Wasserfahrzeugs befestigt ist und mit dem Bilderkennungssystem in Verbindung steht, das Objekte identifiziert und verfolgt, die an der Wasseroberfläche treiben und vom Wasserfahrzeug stammen können. Auf diese Weise kann insbesondere ein "Mann über Bord"-Alarm automatisch ausgelöst werden, wenn das System neben oder hinter dem Schiff ein Objekt erkennt, das davor im Bereich vor dem Schiff nicht sichtbar war.

Eine besonders begünstigte Eigenschaft des erfindungsgemäßen Verfahrens sieht vor, dass die Bilddaten einem Mapping unterzogen werden, bei dem ein zentraler Bereich über ein erstes Vektorfeld und ein peripherer Bereich über ein peripheres Vektorfeld auf einen gemappten Datenstrom abgebildet werden, und dass das erste Vektorfeld zeitlich im Wesentlichen unveränderlich ist und das periphere Vektorfeld in Abhängigkeit von einer Bewegung des Kamerasystems im Raum im Sinn einer stabilisierten Abbildung zeitlich veränderlich ist. Die aus den Daten der einzelnen Kameras zusammengesetzten Daten werden zu den erwähnten Bilddaten zusammengesetzt, die gleichsam die Rohdaten darstellen. In einem Mapper werden die Bilddaten anhand der Vektorfelder umgerechnet, um ein auf einem Monitor anzeigbares Bild zu erhalten. Die Umrechnungsvorschrift in Form der Vektorfelder wird laufend in einem Mapping Generator erzeugt. Diese Umrechnungsvorschrift kann gewünschte Verzerrungen oder Verschiebungen beinhalten, um es der Überwachungsperson zu ermöglichen, das Bild zu zoomen oder den Bildausschnitt zu verschieben, sie beinhaltet aber auch die Möglichkeit, eine selektive Stabilisierung durchzuführen.

Zur Durchführung der Stabilisierung kann die Bewegung des Kamerasystems im Raum durch Gyrosensoren erfasst werden. Aufgrund dieser Daten kann der Mapping Generator die Bewegung der einzelnen Pixel des Bildes aufgrund der Schwankungsbewegung berechnen und eine Kompensation bestimmen. Es ist gleichermaßen möglich, dass die Bewegung des Kamerasystems im Raum durch eine Analyse der Bilddaten erfasst wird. Bevorzugt werden diese beiden Möglichkeiten miteinander kombiniert, um optimale Ergebnisse zu erhalten.

Bevorzugterweise ist zwischen dem zentralen Bereich und dem peripheren Bereich ein Übergangsbereich vorgesehen, in dem die Bilddaten durch ein zweites Vektorfeld abgebildet werden, das ringförmig um das erste Vektorfeld ausgebildet ist und vom peripheren Vektorfeld umgeben ist und das innen in das erste Vektorfeld und außen in das periphere Vektorfeld übergeht. In diesem Bereich findet naturgemäß eine gewisse Verzerrung statt, was aber in Kauf genommen werden kann, wenn man die Vorteile der selektiven Stabilisierung gegenüberstellt. Der Übergang sollte dabei sanft verlaufend gestaltet sein, um Artefakte im Bild zu vermeiden.

Die selektive Stabilisierung kann in bevorzugte Weise so ausgestaltet sein, dass das periphere Vektorfeld darauf optimiert ist, dass die Koordinaten von stationären Objekten im peripheren Bereich im gemappten Datenstrom einer minimalen Schwankung unterliegen.

Alternativ kann das periphere Vektorfeld so ausgebildet sein, dass die Horizontlinie im Wesentlichen konstant bleibt. Diese Variante ist in der Regel einfacher umzusetzen, setzt aber voraus, dass eine Horizontlinie erkennbar und identifizierbar ist.

Es ist für die Anwendung besonders günstig, wenn die Grenzen zwischen dem ersten Vektorfeld und dem zweiten Vektorfeld beziehungsweise zwischen dem zweiten Vektorfeld und dem peripheren Vektorfeld einstellbar ausgeführt sind. So kann je nach Anforderung der zentrale Bereich auf den Umriss des Schiffs selbst beschränkt sein, es kann aber auch eine gewisse Umgebung des Schiffs dem zentralen Bereich zugeordnet werden. Analog kann die Grenze einstellbar ausgeführt sein, ab der eine vollständige Stabilisierung durchgeführt wird, d.h. ab der der periphere Bereich beginnt.

Die Erfindung betrifft auch eine Vorrichtung zur Überwachung der Umgebung eines Objekts gemäß Patentanspruch 12.

In der Folge wird die Erfindung anhand der in den Figuren dargestellten Ausführungsbeispiele näher erläutert. Es zeigen:

Fig. 1     schematisch ein Schiff mit einer erfindungsgemäßen Vorrichtung in einer seitlichen Ansicht;

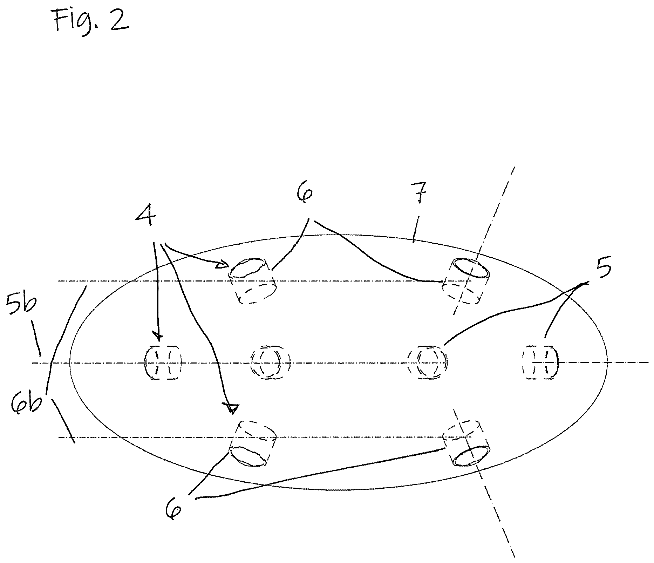

Fig. 2     ein Detail von Fig. 1;

Fig. 3     eine Ansicht von unten;

Fig. 3a    eine Ansicht von oben, in zwei Gehäusen, mit größerem Mast 2;

Fig. 4     eine Darstellung auf einem Bildschirm;

Fig. 5     eine alternative Darstellung auf einem Bildschirm;

Fig. 6     ein Blockdiagramm, das den grundsätzlichen Aufbau der erfindungsgemäßen Vorrichtung darstellt;

Fig. 7     eine Darstellung der verschiedenen Bereiche mit unterschiedlicher Bildbearbeitung;

Fig. 8     und Fig. 9 Darstellungen, die die unterschiedlichen Stabilisierungsmodi visualisieren sollen.

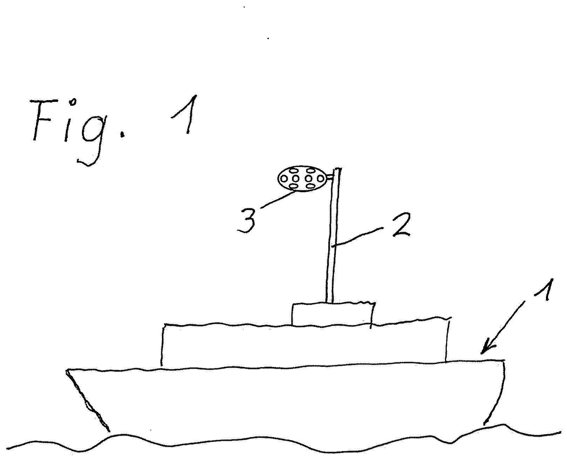

In Fig. 1 ist schematisch ein Objekt 1, nämlich ein Schiff dargestellt, das einen Mast 2 aufweist. Im oberen Abschnitt des Masts 2 ist eine Halterung 3 angebracht.

Die Halterung 3 besteht aus einem der Maststruktur angepassten Gehäuse 7 oder mehreren Gehäusen 7, in dem bzw. in denen ein Kamerasystem 4 angeordnet ist, das aus mehreren ersten Kameras 5 und mehreren weiteren Kameras 6 besteht. Die ersten Kameras 5 sind in einer Ebene 5b in gleichmäßigen Winkelabständen 5c angeordnet. Die weiteren Kameras 6 sind in einer unteren oder oberen Ebene 6b in bevorzugterweise gleichmäßigen Winkelabständen angeordnet und haben nach unten bzw. oben gerichtete optische Achsen 6a. Die optischen Achsen 5a, 6a können aber müssen nicht in einem gemeinsamen Mittelpunkt 8 zusammenlaufen. Auf diese Weise kann eine Vollkugel oder ein Teil davon ab einem gewissen Abstand vom Kamerasystem 4 erfasst werden und gleichzeitig naheliegende Objekte ausgeblendet werden.

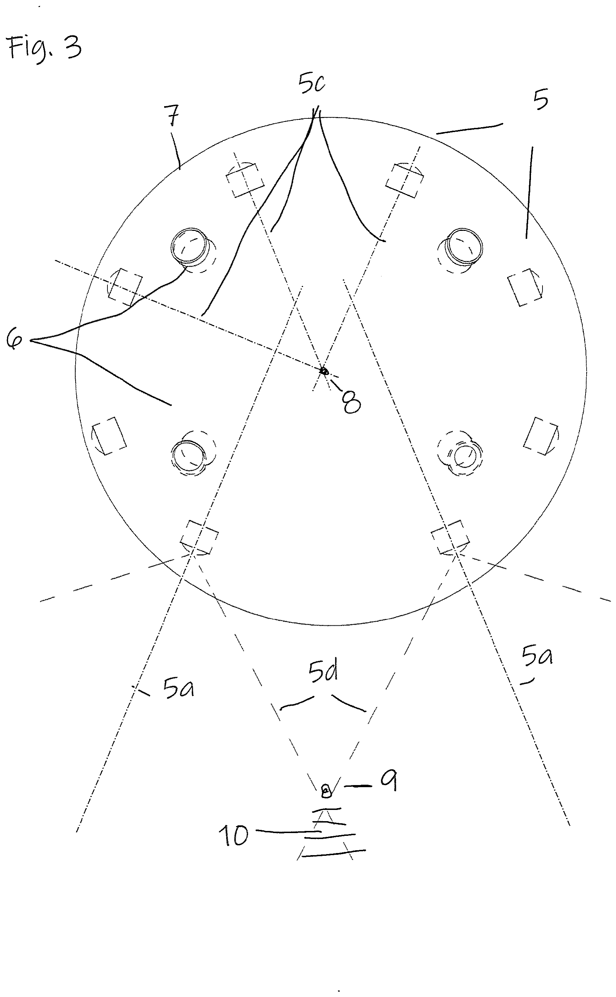

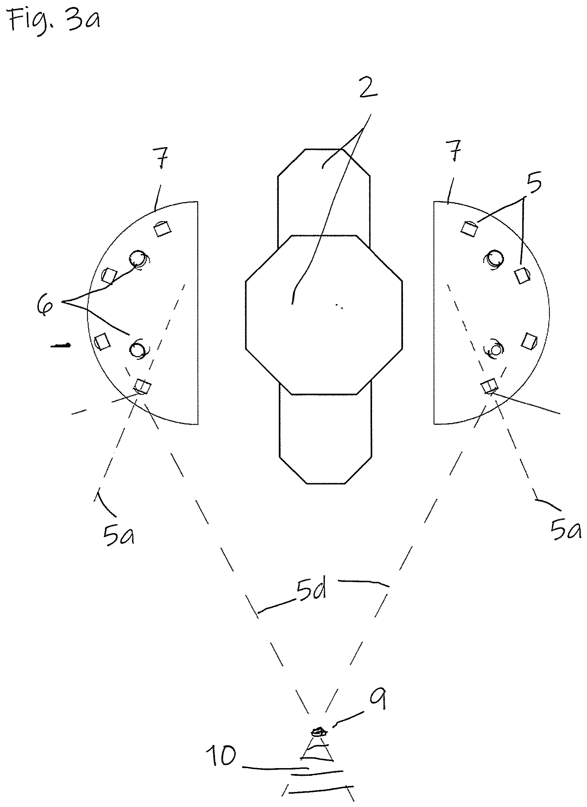

In Fig. 3 sind beispielhaft die Grenzen 5d des Bildbereichs der einzelnen Kameras eingezeichnet, die sich bei 9 schneiden, sodass jenseits von 9 ein Überlappungsbereich 10 entsteht, der von mindestens zwei Kameras 5 abgedeckt wird. Auf diese Weise ist es möglich, uninteressante Strukturen, wie zum Beispiel den Mast 2, auszublenden.

In Fig. 3a ist beispielhaft eine Halterung in zwei getrennten Gehäusen dargestellt, die auf einem großen Mast 2 befestigt ist, und es ist der Überlappungsbereich 10 wie in Fig. 3 gezeigt.

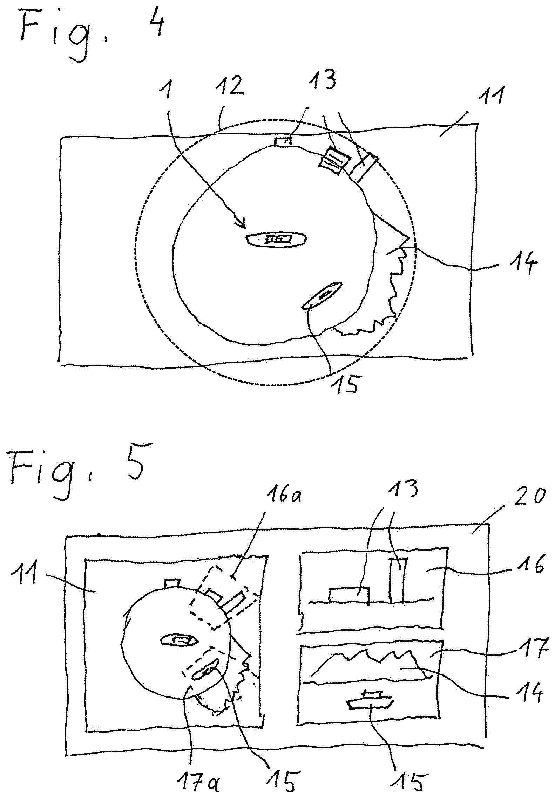

In Fig. 4 ist schematisch eine mögliche Darstellung in einem ersten Fenster 11 eines nicht dargestellten Überwachungsmonitors gezeigt. Das eigene Schiff (Objekt 1) ist im Zentrum, die Beobachtungshorizontlinie ist mit 12 kreisförmig herum angezeigt. Bauwerke 13 und Landschaften in großer Entfernung 14 sind in der Nähe des Beobachtungshorizonts sichtbar. Ein benachbartes Schiff ist mit 15 angedeutet. Diese werden hier gemeinsam auch als Bildobjekte 13, 14, 15 bezeichnet.

In Fig. 5 ist ein Überwachungsmonitor 20 mit einem ersten Fenster 11 entsprechend Fig. 4 und zwei weiteren Fenstern 16, 17 gezeigt. Die in den weiteren Fenstern 16, 17 sichtbaren Bauwerke 13 und Landschaften 14 sind lagerichtig dargestellt und der sichtbare Bereich ist mit unterbrochenen Linien 16a, 17a im ersten Fenster 11 angezeigt.

Auf diese Weise kann ein Benutzer schnell und leicht fassbar sowohl einen Überblick als auch interessante Details wahrnehmen.

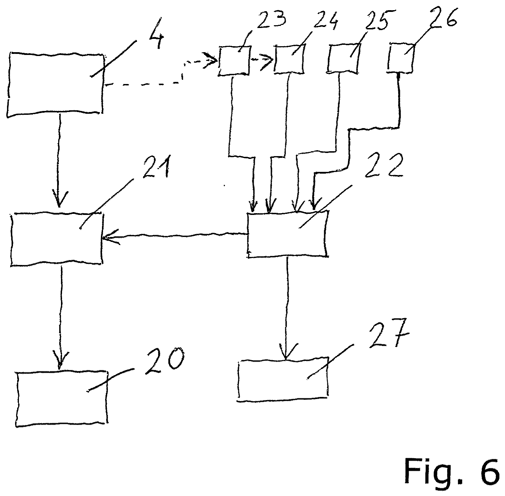

Das Blockdiagramm in Fig. 6 zeigt den Aufbau der Bildverarbeitung, die die erfindungsgemäße Vorrichtung wesentlich ausmacht.

Ein Kamerasystem 4 liefert Bilddaten, die aus den Datenströmen der einzelnen Kameras bestehen. Diese werden einem Mapper 21 zugeführt, der diese Daten in Echtzeit verarbeitet. In einem ersten Schritt werden die Daten der einzelnen Kameras zu einer Gesamtdarstellung zusammengesetzt. Danach erfolgt die eigentliche Bildverarbeitung, die in der Folge ausführlich erklärt wird. Auf einem Überwachungsmonitor 20 wird das bearbeitete Bild dargestellt.

Die zeitlich veränderliche Übertragungsfunktion, die der Mapper 21 auf die Bilddaten anwendet, wird von einem Mapping Generator 22 erzeugt, der über verschiedene Input-Ports angesteuert wird. Ein Bilderkennungs-Modul 23 kann die durch die Bewegung des Kamerasystems verursachte Bewegung der Pixel aus dem Bild errechnen. Alternativ oder zusätzlich kann ein Horizonterkennungs-Modul in den Bilddaten die Lage des Horizonts feststellen. Gyrosensoren 25 sind ebenfalls von Nutzen, um die Stabilisierung zu berechnen. Über eine Eingabeschnittstelle 26 kann die Überwachungsperson Einfluss auf die Darstellung nehmen. Hier können die Art der Projektion, der Zoom, der Bildausschnitt, die Art und die Stärke der Stabilisierung, der Modus der Darstellung usw. eingestellt werden.

Ein zusätzlicher Ausgangskanal 27 ist vorgesehen, um die Übertragungsfunktion des Mapping Generators insgesamt oder einzelne Parameter davon auszugeben, um sie getrennt weiterzuverarbeiten, falls das erforderlich ist.

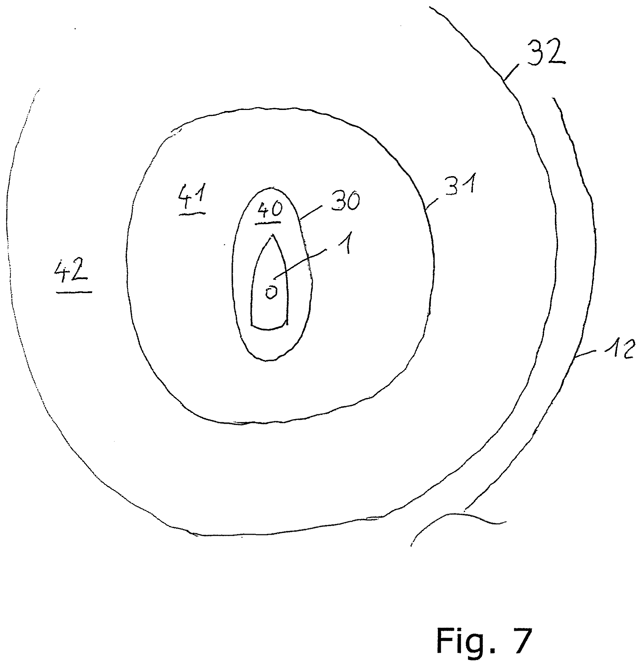

Die Rechenoperationen, die der Mapper anhand des Outputs des Mapping Generators durchführt, werden nun anhand der Fig. 7 erklärt. Innerhalb eines Beobachtungshorizonts 12 liegen Bilddaten vor, die beispielsweise in Polarkoordinaten als zeitlich veränderliche Funktion p(r, φ, t) bzw. p(x, t) mit x als Ortsvektor des jeweiligen Punkts gegeben sein können. Der Definitionsbereich der Funktion p wird in einen zentralen Bereich 40, einen Übergangsbereich 41 und einen peripheren Bereich 42 unterteilt. Die Grenzen 30 und 31 zwischen diesen Bereichen 40, 41 und 42 können kreisförmig sein, aber auch anders geformt, beispielsweise elliptisch.

Für jeden der Bereiche 40, 41 und 42 wird ein separates zeitabhängiges Vektorfeld V berechnet, das sich aus zwei Komponenten zusammensetzt:

$$V = U + C$$

Dabei bedeutet U eine Transformation aufgrund des gewünschten Zoomfaktors, Bildausschnitts und der eingestellten Projektion und C eine Korrektur aufgrund der erforderlichen Stabilisierung. Wenn im zentralen Bereich 40 beispielsweise keine Stabilisierung erforderlich ist, dann ist C dort dauerhaft Null.

Anstelle einer additiven Verknüpfung von U und C kann auch eine sequenzielle Verarbeitung erfolgen.

Wenn C im zentralen Bereich 40 als $C_{40}$ und im peripheren Bereich 42 als $C_{42}$ bezeichnet wird, dann kann $C_{41}$ im Übergangsbereich beispielsweise als gewichtetes Mittel der Werte von als $C_{40}$ und $C_{42}$ bestimmt werden, die am gleichen Radius an den Grenzen 30 und 31 der Bereiche 40, 41 und 42 liegen. Die Gewichtung kann anhand einer mathematischen Funktion, wie beispielsweise einer logistischen Funktion, in Abhängigkeit der Abstände der Punkte erfolgen, um einen sanften Übergang zu gewährleisten. Die Horizontlinie ist mit 32 gekennzeichnet.

Im Mapper 21 erfolgt eine Umrechnung der Bildpunkte gemäß der Formel

$$q(x + V(x, t)) = p(x, t)$$

Danach wird typischerweise eine Koordinatentransformation in kartesische Koordinaten durchgeführt.

Die so errechneten Bildpunkte werden auf ein geeignetes Punktraster interpoliert und sind dann zur Weiterverarbeitung oder zur direkten Anzeige auf einem Monitor geeignet.

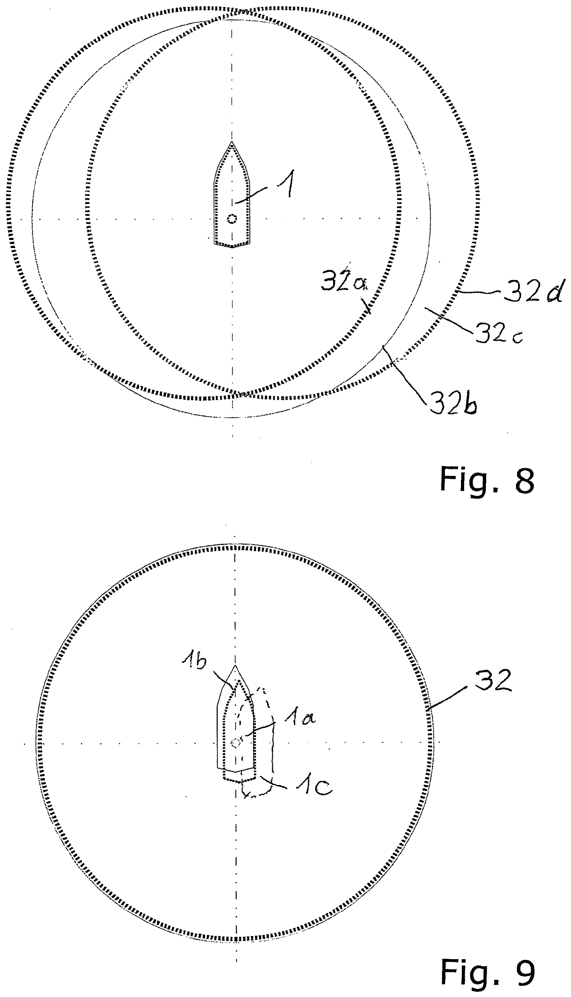

In der Fig. 8 ist eine nicht stabilisierte Darstellung schematisch gezeigt. Das Objekt 1 ist im Zentrum stabil, d.h. unbeweglich dargestellt. Mit 32a, 32b, 32c und 32d sind die Horizontlinien zu unterschiedlichen Zeitpunkten dargestellt. Die scheinbare Bewegung der Horizontlinien 32a, 32b, 32c und 32d resultiert aus der Neigung des Mastes und aus der translatorischen Bewegung der Mastspitze aufgrund dieser Neigung

Die Fig. 9 stellt eine vollständig stabilisierte Darstellung dar. Hier ist die Horizontlinie 32 zeitlich nicht veränderlich, wogegen die Darstellung des Objekts veränderlich ist, was mit 1a, 1b und 1c angedeutet ist.

Mit dem erfindungsgemäßen Verfahren ist es möglich, die Vorteile dieser beiden Darstellungen zu kombinieren und eine selektiv stabilisierte Darstellung anzubieten.

Allgemein ist anzumerken, dass in den obigen Ausführungen zur Vereinfachung von einem an sich stillstehenden Objekt ausgegangen wird, das nur Schwankungsbewegungen durch den Wellengang unterworfen ist, wie das beispielsweise bei einem vor Anker liegenden Schiff bei rauer See der Fall ist. Wenn das Schiff in Fahrt ist, dann wird die dadurch verursachte Bewegung durch die Stabilisierung natürlich nicht ausgeglichen und auch eine vollkommen stabilisierte Horizontlinie 32 ist dann zeitlich entsprechend dem Kurs des Schiffs veränderlich. Diese Veränderung ist jedoch entsprechend langsamer und nicht nur nicht störend, sondern für eine korrekte Beurteilung der Situation erforderlich.

**Patentansprüche**

1. Verfahren zur Überwachung der Umgebung eines Objekts (1), bei dem Bilddaten von einem Kamerasystem (4) generiert werden, das oberhalb des Objekts (1) angeordnet ist, und wobei diese Bilddaten zur Weiterverarbeitung aufbereitet werden, **dadurch gekennzeichnet, dass** eine selektive Stabilisierung des Kamerasysteme (4) in Bezug auf die Umgebung durchgeführt wird.

2. Verfahren nach Anspruch 1, **dadurch gekennzeichnet, dass** durch das Kamerasystem (4) die Umgebung des Objekts (1) mindestens bis zu einem Beobachtungshorizont (12) erfasst wird und bei der Aufbereitung der Daten ein erster Datenstrom und mindestens ein weiterer Datenstrom erzeugt wird, wobei der erste Datenstrom eine Gesamtdarstellung der erfassten Daten beinhaltet und der weitere Datenstrom einen Abschnitt des Beobachtungshorizonts (12) und eines davorliegenden Bereichs lagerichtig darstellbar beinhaltet.

3. Verfahren nach einem der Ansprüche 1 oder 2, **dadurch gekennzeichnet, dass** die Bilddaten einem Mapping unterzogen werden, bei dem ein zentraler Bereich über ein erstes Vektorfeld und ein peripherer Bereich über ein peripheres Vektorfeld auf einen gemappten Datenstrom abgebildet werden, und dass das erste Vektorfeld zeitlich im Wesentlichen unveränderlich ist und das periphere Vektorfeld in Abhängigkeit von einer Bewegung des Kamerasystems im Raum im Sinne einer stabilisierten Abbildung zeitlich veränderlich ist.

4. Verfahren nach Anspruch 3, **dadurch gekennzeichnet, dass** die Bewegung des Kamerasystems (4) im Raum durch Gyrosensoren erfasst wird.

5. Verfahren nach einem der Ansprüche 3 oder 4, **dadurch gekennzeichnet, dass** die Bewegung des Kamerasystems (4) im Raum durch eine Analyse der Bilddaten erfasst wird.

6. Verfahren nach einem der Ansprüche 3 bis 5, **dadurch gekennzeichnet, dass** zwischen dem zentralen Bereich und dem peripheren Bereich ein Übergangsbereich vorgesehen ist, in dem die Bilddaten durch ein zweites Vektorfeld abgebildet werden, das ringförmig um das erste Vektorfeld ausgebildet ist und vom peripheren Vektorfeld umgeben ist und das innen in das erste Vektorfeld und außen in das periphere Vektorfeld übergeht.

7. Verfahren nach einem der Ansprüche 3 bis 6, **dadurch gekennzeichnet, dass** das periphere Vektorfeld so ausgebildet ist, dass die Koordinaten von Objekten im peripheren Bereich im gemappten Datenstrom einer minimalen Schwankung unterliegen.

8. Verfahren nach einem der Ansprüche 3 bis 6, **dadurch gekennzeichnet, dass** das periphere Vektorfeld so ausgebildet ist, dass die Horizontlinie (32) im Wesentlichen konstant bleibt.

9. Verfahren nach einem der Ansprüche 6 bis 8, **dadurch gekennzeichnet, dass** die Grenzen zwischen dem ersten Vektorfeld und dem zweiten Vektorfeld beziehungsweise zwischen dem zweiten Vektorfeld und dem peripheren Vektorfeld einstellbar ausgeführt sind.

10. Verfahren nach einem der Ansprüche 2 bis 9, **dadurch gekennzeichnet, dass** der erste Datenstrom und der weitere Datenstrom auf einem Überwachungsmonitor (20) angezeigt werden, auf dem in einem ersten Fenster (11) eine Gesamtdarstellung der erfassten Daten anzeigbar ist und in mindestens einem weiteren Fenster (16, 17) ein Abschnitt des Beobachtungshorizonts (12) und eines davorliegenden Bereichs lagerichtig darstellbar ist.

11. Verfahren nach einem der Ansprüche 1 bis 10, **dadurch gekennzeichnet, dass** das Kamerasystem (4) mehrere Kameras (5, 6) mit aneinander angrenzenden oder überlappenden Bildbereichen aufweist und dass durch überlappende Bildbereiche Teile des Mastes (2) und andere Aufbauten des Objekts (1) im Gesamtbild ausgeblendet werden.

12. Vorrichtung zur Überwachung der Umgebung eines Objekts (1), mit einem Kamerasystem (4), das oberhalb des Objekts (1) angeordnet ist und das dazu ausgebildet ist, die Umgebung des Objekts (1) bis zu einem Beobachtungshorizont (12) zu erfassen, mit einer Datenverarbeitungseinheit, die die vom Kamerasystem (4) aufgenommenen Bilddaten verarbeitet, **dadurch gekennzeichnet, dass** die Datenverarbeitungseinheit einen Mapping Generator (22) umfasst, der eine Umrechnungsvorschrift für einen Mapper (21) generiert, der unterschiedliche Bereiche der Bilddaten einer unterschiedlichen Stabilisierung unterwirft.

13. Vorrichtung nach Anspruch 12, **dadurch gekennzeichnet, dass** der Mapping Generator der Datenverarbeitungseinheit über ein erstes Vektorfeld und ein peripheres Vektorfeld und vorzugsweise ein zweites Vektorfeld verfügt, mit denen die Bilddaten bearbeitet werden.

14. Vorrichtung nach einem der Ansprüche 12 oder 13, **dadurch gekennzeichnet, dass** das Kamerasystem (4) im Infrarotbereich empfindlich ist.

15. Vorrichtung nach einem der Ansprüche 12 bis 14, **dadurch gekennzeichnet, dass** das Kamerasystem (4) auf dem Mast (2) eines Wasserfahrzeugs befestigt ist und mit dem Bilderkennungssystem in Verbindung steht, das Bildobjekte (13, 14, 15) identifiziert und verfolgt, die an der Wasseroberfläche treiben und vom Wasserfahrzeug stammen können.

Fig. 1

Fig. 2

Fig. 3

Fig. 3a

Fig. 4

Fig. 5

Fig. 6

Fig. 7

Fig. 8

Fig. 9

Europäisches
Patentamt

European
Patent Office

Office européen
des brevets

# EUROPÄISCHER RECHERCHENBERICHT

Nummer der Anmeldung

EP 25 21 6580

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 11 887 275 B1 (BAKER III ARTHUR RICHARD [US]) 30. Januar 2024 (2024-01-30) * Spalte 4, Zeile 53 - Spalte 13, Zeile 4; Abbildung 2 * | 1-15 | INV. H04N7/18 |
| A | US 10 931 934 B2 (FLIR BELGIUM BVBA [BE]) 23. Februar 2021 (2021-02-23) * Zusammenfassung * | 1-15 | |
| A | JP 5 954732 B2 (NAT MARITIME RES INST) 20. Juli 2016 (2016-07-20) * Zusammenfassung * | 1-15 | |
| A | US 2021/206459 A1 (JOHNSON MARK [FR] ET AL) 8. Juli 2021 (2021-07-08) * Zusammenfassung * | 1-15 | |
| A | WEI ENPING ET AL: "Maritime Image Stabilization: A Comprehensive Review of Techniques and Challenges", 2024 9TH INTERNATIONAL CONFERENCE ON ELECTRONIC TECHNOLOGY AND INFORMATION SCIENCE (ICETIS), IEEE, 17. Mai 2024 (2024-05-17), Seiten 200-209, XP034646558, DOI: 10.1109/ICETIS61828.2024.10593769 [gefunden am 2024-07-24] * das ganze Dokument * | 1-15 | RECHERCHIERTE SACHGEBIETE (IPC) H04N |
| A | US 2023/023434 A1 (NOWICKA WERONIKA [GB] ET AL) 26. Januar 2023 (2023-01-26) * Zusammenfassung * | 1-15 | |

Der vorliegende Recherchenbericht wurde für alle Patentansprüche erstellt

| Recherchenort | Abschlußdatum der Recherche | Prüfer |
|---|---|---|
| Den Haag | 21. Januar 2026 | Santos Conde, José |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 21 6580

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-01-2026

| Im Recherchenbericht angeführtes Patentdokument | Datum der Veröffentlichung | Mitglied(er) der Patentfamilie | Datum der Veröffentlichung |
|---|---|---|---|
| US 11887275 B1 | 30-01-2024 | KEINE | |
| US 10931934 B2 | 23-02-2021 | KEINE | |
| JP 5954732 B2 | 20-07-2016 | JP 5954732 B2<br>JP 2013223028 A | 20-07-2016<br>28-10-2013 |
| US 2021206459 A1 | 08-07-2021 | GB 2591041 A<br>GB 2611002 A<br>GB 2611003 A<br>US 2021206459 A1<br>US 2025196977 A1<br>WO 2020061545 A1 | 14-07-2021<br>22-03-2023<br>22-03-2023<br>08-07-2021<br>19-06-2025<br>26-03-2020 |
| US 2023023434 A1 | 26-01-2023 | US 2023023434 A1<br>WO 2021119366 A1 | 26-01-2023<br>17-06-2021 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 11887275 B